(19) Europäisches Patentamt / European Patent Office / Office européen des brevets

(11) **EP 4 252 189 B1**

(12) **EUROPEAN PATENT SPECIFICATION**

(45) Date of publication and mention
of the grant of the patent:
**19.11.2025 Bulletin 2025/47**

(21) Application number: **21830858.3**

(22) Date of filing: **30.11.2021**

(51) International Patent Classification (IPC):
**G06T 7/90** $^{(2017.01)}$

(52) Cooperative Patent Classification (CPC):
**G06T 7/90**

(86) International application number:
**PCT/US2021/061090**

(87) International publication number:
**WO 2022/115737 (02.06.2022 Gazette 2022/22)**

(54) **CREATING A COLORCLOUD**

ERZEUGUNG EINER FARBWOLKE

CRÉATION D'UN NUAGE DE COULEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2020 US 202017107168
25.02.2021 FR 2101816**

(43) Date of publication of application:
**04.10.2023 Bulletin 2023/40**

(73) Proprietors:
• **L'OREAL**
**75008 Paris (FR)**
Designated Contracting States:
**AT BE BG CH CY CZ DE DK EE ES FI FR GB GR HR HU IE IS IT LI LT LU LV MC MK MT NL NO PL PT RO RS SE SI SK SM TR**
• **Doumi, Mehdi**
**Clark, NJ 07066 (US)**
Designated Contracting States:
**AL**

(72) Inventor: **DOUMI, Mehdi**
**Clark, New Jersey 07066 (US)**

(74) Representative: **Ipsilon**
**Le Centralis**
**63, avenue du Général Leclerc**
**92340 Bourg-la-Reine (FR)**

(56) References cited:
**US-B2- 9 984 307**

• **BARTHEL KAI: "3D-Data Representation with ImageJ", 1 May 2006 (2006-05-01), XP055851678, Retrieved from the Internet <URL:https://www. researchgate.net/profile/Kai-Barthel/publication/ 215458973_3D-Data_Representation_with_Ima geJ/links/540daa810cf2f2b29a39ab8a/ 3D-Data-Representation-with-ImageJ.pdf> [retrieved on 20211015]**
• **SANTAMARIA HERRERO ALVARO: "H3stogram", 28 September 2020 (2020-09-28), XP055851684, Retrieved from the Internet <URL:https://web.archive.org/web/ 20200928024658/http://h3stogram.herokuapp. com/#help> [retrieved on 20211015]**

**Description**

CROSS-REFERENCE TO RELATED APPLICATIONS

This application claims the benefit of U.S. Application No. 17/107,168, filed November 30, 2020; and French Application No. FR2101816 filed February 25, 2021.

BACKGROUND

Spectrophotometers are used to read the color of hair swatches, but it provides only a single digital representation of a material in the form of a single RGB, L*a*b*, LCh or HSV triplet, and typically only reads an area of less than 1cmx1cm. Further, when comparing two materials, the analysis is limited to euclidean distances in colorspace between 3-spaces (e.g. $delta\text{-}E1976 = \sqrt{(L^*_2 - L^*_1)^2 + (a^*_2 - a^*_1)^2 + (b^*_2 - b^*_1)^2}$ ), and this threshold for detection is not determined yet in hair color by humans. Furthermore, the single color (e.g. RGB or L*a*b*) is an average color of the region of measure, and an average color is not concrete, but rather a mathematical concept. Theoretically, for example, one may take the average color of a region of hair and that color may not even exist in that region of hair.

US9984307B2 discloses a method for imaging a hair inspection area, creating a color histogram from the acquired image, comparing this histogram to a wig color histogram and deriving a color consistency index based on this comparison

SUMMARY

In an aspect, the present disclosure is directed to, among other things, systems, devices, and methods for creating a 3-dimensional virtual representation, colorcloud, and the like for an object, a material, and the like from one or more digital images, video, optical sensor information, and the like.

The disclosure describes generating colorclouds for the object, wherein the colorcloud contains every color present in a group of frames of the plurality of frames; and identifying characteristics of the hair using the colorcloud.

In one embodiment, the colorcloud contains a frequency of the every color present in the one or more of the plurality of frames.

One embodiment further comprises comparing a first colorcloud to a second colorcloud; and visualizing, from the comparing, similarities and differences between the first colorcloud and the second colorcloud.

One embodiment further comprises displaying the colorcloud in a color space.

In one embodiment, the characteristics of the hair comprise identifying a shine level.

Also disclosed is a system not covered by the claims comprising: a colorcloud unit including computational circuitry operably coupled to an image sensor and configured to generate a 3-dimensional virtual representation of color information associated with a plurality of digital images of an object; and a significant characteristic unit including computational circuitry to identify one or more significant characteristics of the object and to generate one or more virtual instances on a graphical user interface display indicative of the identity of a significant characteristic of the object based on one or more inputs associated with the 3-dimensional virtual representation of color information of the object.

In one aspect, the colorcloud unit including the computational circuitry configured to generate a 3-dimensional virtual representation of color information associated with the plurality of digital images of the object comprises computational circuitry configured to generate a 3-dimensional virtual representation of color information including regions indicative of a color frequency of occurrence, color variation, or color intensity distribution associated with the object.

In one aspect, the plurality of digital images of the object comprises a plurality of digital images of a hair; and wherein the colorcloud unit including the computational circuitry configured to generate a 3-dimensional virtual representation of color information associated with the plurality of digital images of the object comprises computational circuitry configured to generate a 3-dimensional virtual representation of hair color information associated the plurality of digital images of a hair.

In one aspect, the plurality of digital images of the object comprises a plurality of digital images of a hair; and wherein the colorcloud unit including the computational circuitry configured to generate a 3-dimensional virtual representation of color information associated with the plurality of digital images of the object comprises computational circuitry configured to generate a 3-dimensional virtual representation of hair color information and a 3-dimensional virtual representation of hair characteristic associated the plurality of digital images of a hair.

In one aspect, the colorcloud unit including the computational circuitry configured to generate a 3-dimensional virtual representation of color information associated with the plurality of digital images of the object comprises computational circuitry configured to generate a 3-dimensional virtual representation of color information including voxels with a varying intensity to indicate the color frequency of occurrence of a particular characteristic associated with the imaged object.

In another aspect, the plurality of digital images of the object comprises a plurality of digital images of a hair; and wherein the computational circuitry configured to generate a 3-dimensional virtual representation of color information including voxels with a varying intensity to indicate the color frequency of occurrence of a particular characteristic associated with the imaged object further includes computational circuitry configured to generate a 3-dimensional virtual representation of hair characteristic information including voxels indicative of gray hair coverage, shine, radiance, evenness associated the plurality of digital images of the hair.

## BRIEF DESCRIPTION OF DRAWINGS

FIG. 1 shows a user dragging a cradle across their hair to capture a video and create a colorcloud for it.
FIG. 2 shows one method of creating and utilizing a colorcloud.
FIG. 3 shows a first embodiment of a cradle.
FIG. 4 shows a second embodiment of a cradle, where the cradle can be attached to a smartphone.
FIG. 5A shows a user's hair that was used for capturing a video, wherein the video captures across the length of the user's hair (starting from their hair roots and finishing at their hair tips).
FIG. 5B shows an example of the plurality of frames of a video, laid out in chronological order, where a user captured video of their hair starting from their hair's roots and finishing at their hair's tips.
FIG. 6 shows an example of a single colorcloud that displays all the colors from every frame of a video.
FIG. 7 shows examples of colorclouds that have color information and frequency information.
FIG. 8 shows an example of four different colorclouds created from swatches, which are then overlaid in the L*a*b* colorspace (projected on the L* and b* dimensions) to visualize their similarities and differences.
FIG. 9 shows shared colors and unique colors between different hair directly on a video.

## DETAILED DESCRIPTION

This disclosure describes a physical device and a unique algorithm that can quantify the optical reflections of any material, such as hair swatches and real-life hair on human heads, in a way that is highly repeatable, portable, and can work in any lighting environment. The device, which will be referred to as a cradle, can be used on a material (like hair), and have the material analyzed with a colorcloud algorithm to obtain a holistic, digital representation of that material, defined herein as a colorcloud. This colorcloud can be compared to other colorclouds of other reflective materials, or the same reflective material at a different time point (e.g. colored hair before and after it has been washed). The embodiments disclosed herein extract the existing colors from video captures of materials (and does not manipulate them in any arithmetic way to produce a net result). The technique can use robust sets of color as its basis for detecting minute color changes.

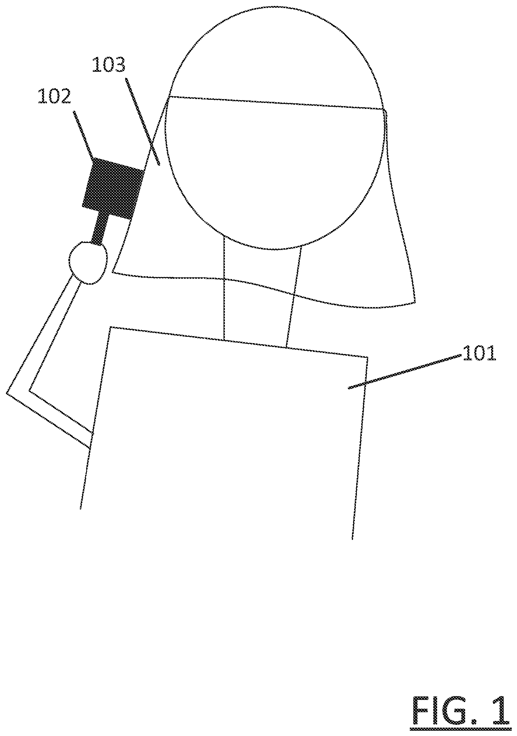

FIG. 1 shows a use case in one embodiment. A user 101 can take the cradle 102, and drag it across their hair 103. As the cradle 102 is dragged across the user's hair 103, it can obtain video of the hair 103. This video can be analyzed using a colorcloud algorithm to produce a colorcloud.

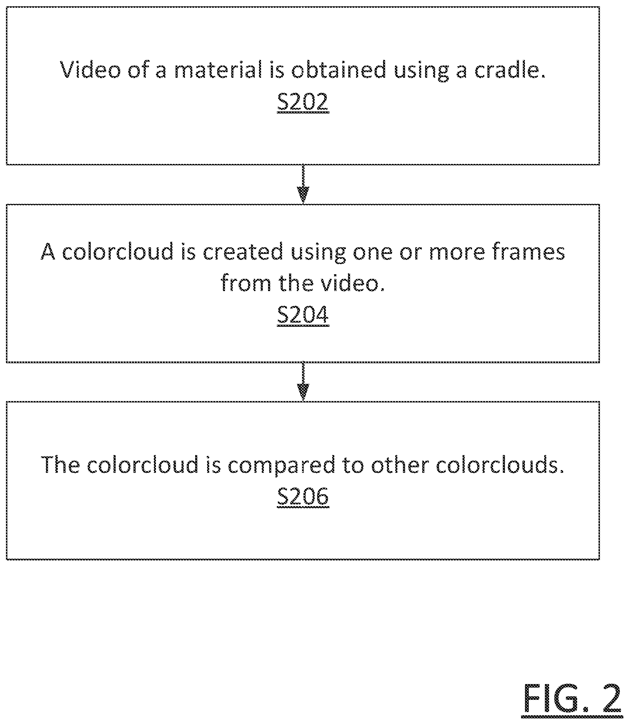

FIG. 2 is a flowchart walking through one embodiment. In S202 video of a material, such as a user's hair, is obtained using a cradle. For example, to create a colorcloud for a user's hair, the user can run the cradle along the entire length of their hair (i.e. from the hair's root to tip). In S204, a colorcloud is created from one or more frames of the video. Essentially, all the colors that were in the one or more frames are extracted and shown in a colorcloud. In S206, the colorcloud is compared to other colorclouds. This comparing can be used for color matching and/or color differentiation.

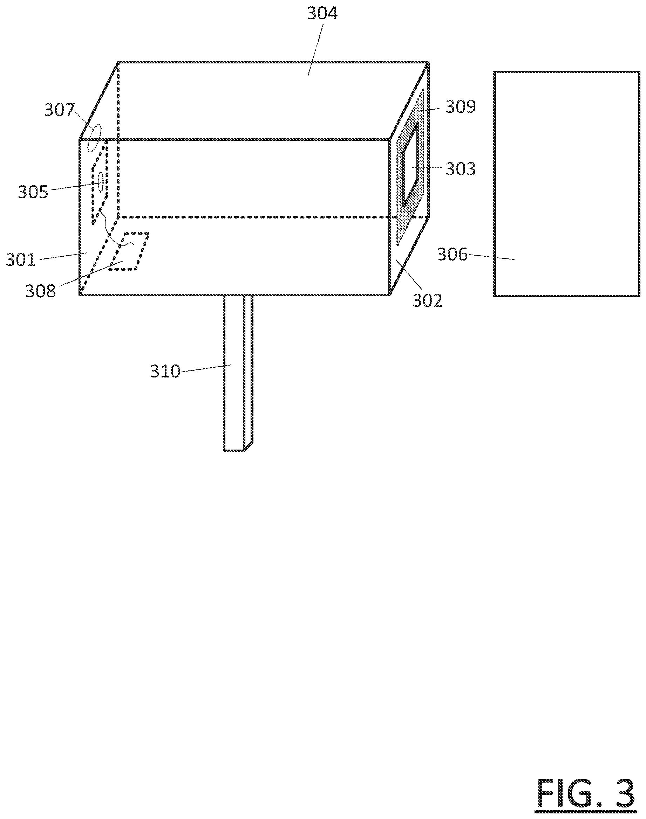

The cradle is an apparatus that enables one to capture video of a material so that a colorcloud of the material can be created. An example of a cradle is shown in FIG. 3 (solid lines represent the cradle's exterior, while dashed lines represent something interior). The cradle has a first end 301, a second end 302, a window 303 on the second end 302, and a wall 304 connecting the first end 301 to the second end 302. In one embodiment, the first end 301 and the second 302 end are at opposite ends of the cradle. An image sensor, such as a video recording device 305 can be attached to the first end 301 inside of the cradle to capture video of whatever material 306 (e.g. hair) is visible through the window 303. Further, the cradle can have processing circuitry 308 connected to the video recording device 305 and be configured to create a colorcloud from the video of the material 306, compare the created colorcloud to previous colorclouds, etc.. The second end 302 of the cradle can be colored with a predetermined set of colors 309 adjacent to the window 303 for color separation when captured by the video recording device 305. The video can capture both the material 306 through the window 303, and the predetermined set of colors 309 adjacent to the window 303; then, the predetermined (i.e. known) colors can be used for reference when determining color of the material 306. A light 307 can also be attached to the cradle to provide a well-lit field of view from the video recording device 305 to the window 303. The cradle can be used to maintain a consistent distance between the video recording device 305 and the material 306 when taking a video. The cradle can also have a handgrip 310.

The processing circuitry 308 can comprise a colorcloud unit and a significant characteristic unit. The colorcloud unit can include circuitry coupled to an image sensor and be configured to generate a 3-dimensional virtual representation of color information associated with a plurality of digital images of an object, such as regions indicative of a color frequency of occurrence, color variation, or color intensity distribution associated with the object. The significant characteristic unit can include circuitry to identify one or more significant characteristics of the object and to generate one or more virtual instances on a graphical user interface display indicative of the identity of a significant characteristic of the object based on one or more inputs associated with the 3-dimensional virtual representation of color information of the object. In one embodiment, the object can be hair and the 3-dimensional virtual representation can be of hair color information and/or hair characteristic information associated with the plurality of digital images of the hair. Further, the 3-dimensional virtual representation can include voxels with a varying intensity to indicate the color frequency of occurrence of a particular characteristic associated with the imaged object. Examples of characteristic information includes object identification data, object characteristic data, color frequency of occurrence data, color variation data, color intensity data, presence of absence of a color data, frame by frame or pixel by pixel color analysis information, and the like. Non-limiting of color information can include hue, tint, tone, shade, and the like. In one embodiment, tint of a basic color is a lighter version of that color, and a shade is a darker version. In one embodiment, tone refers to the lightness (tint) or darkness (shade) of a basic color. If the image object is hair, the 3-dimensional virtual representation can include hair characteristic information including voxels indicative of gray hair coverage, shine, radiance, and evenness associated with the plurality of digital images of the hair. Examples of hair characteristics can include damage-state of hair, concentration of artificial-colorants, color distribution, gray coverage, texture, shine, distribution density, scalp characteristics, etc.

The cradle's main body in FIG. 3 was essentially a hollow rectangular prism with a window 303 on one end. In one embodiment, when the window 303 is covered, the only light inside the body of the cradle can be from the light 307. This can keep the lighting conditions within the cradle consistent. Moreover, in other embodiments, the cradle can have a different shape, such as a cylinder, cube, trapezoidal prism, etc. The cradle can also have a screen, which can be used to visualize the colorcloud.

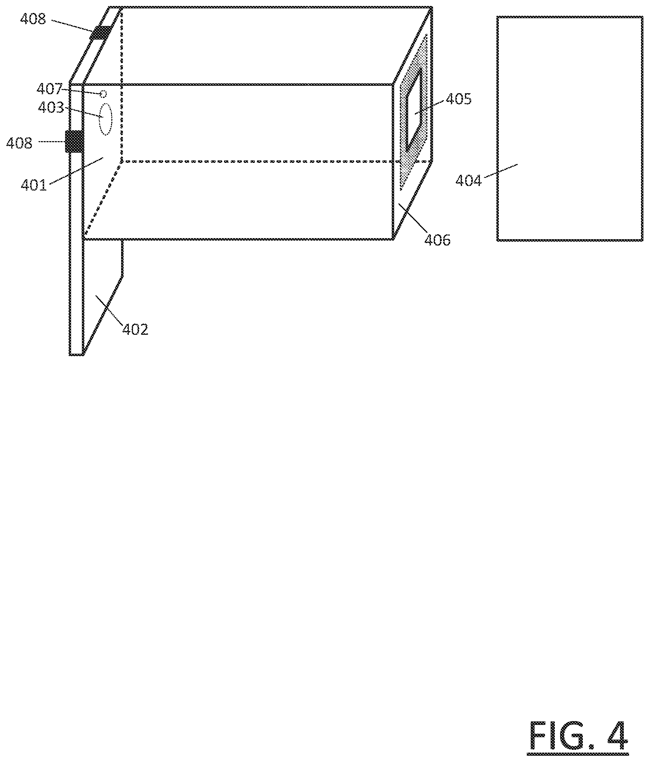

In one embodiment, the first end of the cradle can be configured to use the camera of a mobile device (e.g. smartphone) as the video recording device. An example is shown in FIG. 4, where the first end 401 of the cradle can be an attached smartphone 402. A camera 403 on the smartphone 402 can capture video of the material 404 through the window 405 on the second end 406. Further, processing circuitry already in the smartphone 402 can be used to create the colorcloud. The colorcloud and other related information can be visualized directly on the smartphone's screen. In addition, the smartphone's flash light 407 can be used to provide a well-lit field of view from the smartphone's camera 403 to the window 405. The cradle can also have a holder 408 that allows the smartphone 402 to be properly attached to the cradle when in use, and detached from the cradle when not in use.

The captured video can be of a material where a colorcloud is desired to be produced. The cradle should be held so that the video recording device can capture video of the material through the cradle's opening provided by the window. The window can be held directly against the material so that external light can be blocked from entering inside the cradle. An example of material can be hair on a head. In that case, the cradle can start by capturing video of the roots, and subsequently be dragged across the hair to the tips.

In one embodiment, the video, which comprises a plurality of frames, can be at least six seconds long and at least 60 frames per second. If video is captured of human hair or a hair swatch, this hair can be straight or curly.

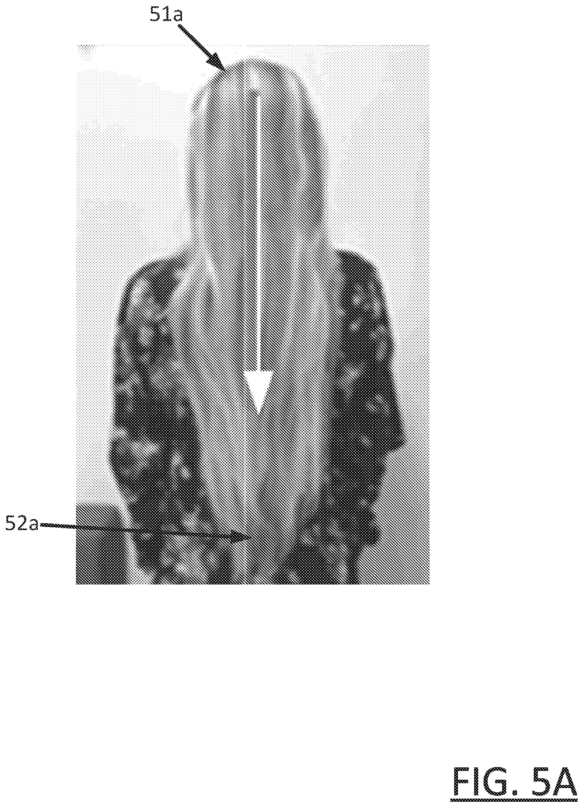

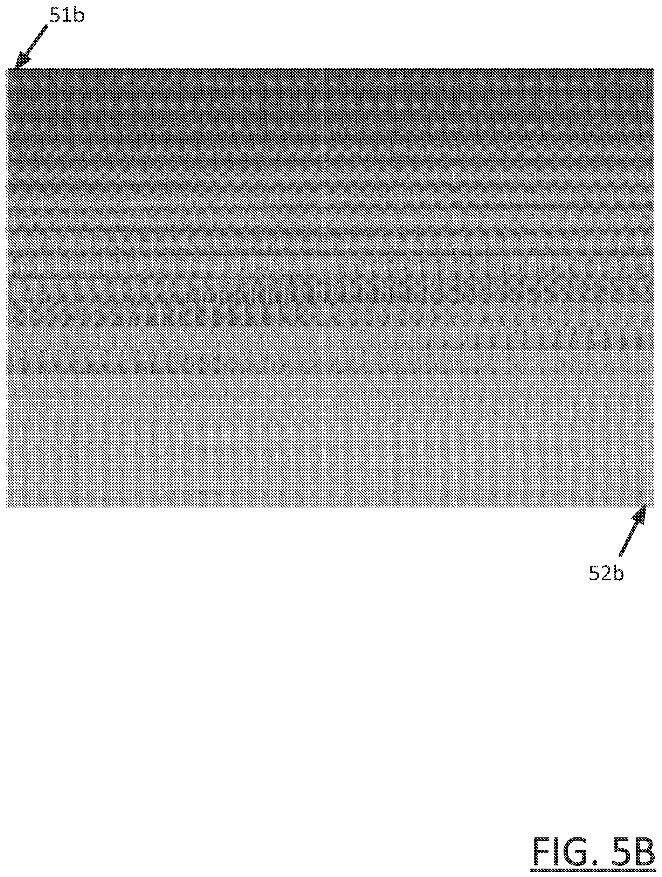

Obtaining a video of a material can include capturing video of someone's hair. An example is shown in FIG. 5A and FIG. 5B. First, referring to FIG. 5A, video is captured of the entire length of a model's hair, starting from their hair's roots 51a and progressing downwards towards their hair's tips 52a. FIG. 5B shows each frame of the captured video (from FIG. 5A) laid out in chronological order, where the top left frame 51b is of the hair's roots 51a and the bottom right frame 52b is of the hair's tips 52a. In another embodiment, obtaining video of a material can include capturing video of less than the entire length of someone's hair (e.g. only capturing half of someone's hair). Note that video can be captured in other directions besides downwards, such as progressing upwards or at an angle.

A colorcloud algorithm can be used to create, from one or more frames of the video, a colorcloud. The colorcloud algorithm can extract color information from the one or more frames. A colorcloud contains every color present in the one or more of the plurality of frames. In another embodiment, a colorcloud contains every color present in the one or more of the plurality of frames, and a frequency of the every color present in the one or more of the plurality of frames. In another embodiment, a colorcloud contains every color present in the one or more of the plurality of frames, and a frequency of every color present in the one or more of the plurality of frames, wherein the frequency exceeds a minimum predetermined threshold.

In an example not covered by the claims, the colorcloud algorithm can produce a colorcloud by extracting all the colors from a single frame of the video. For example, in FIG. 5B, an individual colorcloud can be created for each frame. A colorcloud created for each frame could include all the colors present in that single frame, and, in another embodiment, the frequency of each color present in that single frame.

In the invention, the colorcloud algorithm produces a colorcloud by extracting the cumulative colors from a group of frames in the video (rather than from a single frame). For example, referring back to FIG. 5B, a colorcloud can be produced for each group of 10 frames, where the colorcloud created for each group of 10 frames includes all the colors presents in that particular group of 10 frames, and, in another embodiment, the frequency of each color present that group of 10 frames.

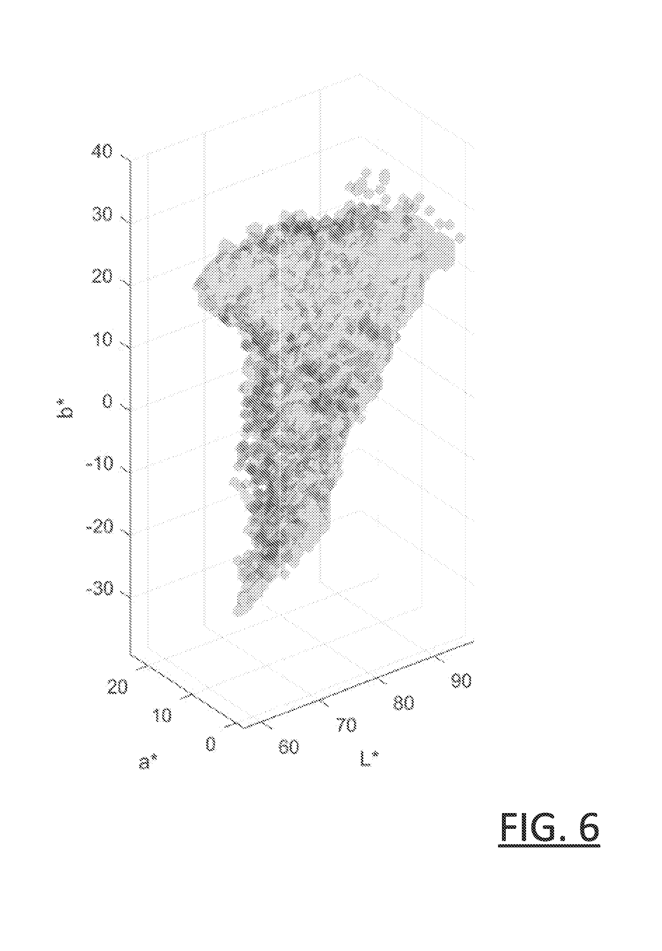

An example of a colorcloud is shown in FIG. 6, where the colorcloud displays every color across all the frames of a video using a colorspace. Because videos are time-based, choosing specific frames can allow a colorcloud to be made at a specific point in time and/or range in time.

Once the colorcloud algorithm has extracted all the colors from one or more frames of a video, the colorcloud can be displayed in a myriad of forms. For example, colors can be displayed in a colorspace; the colorspace could use coordinates such as L*a*b*, RGB, LCh, HSV, etc. to convey color information.

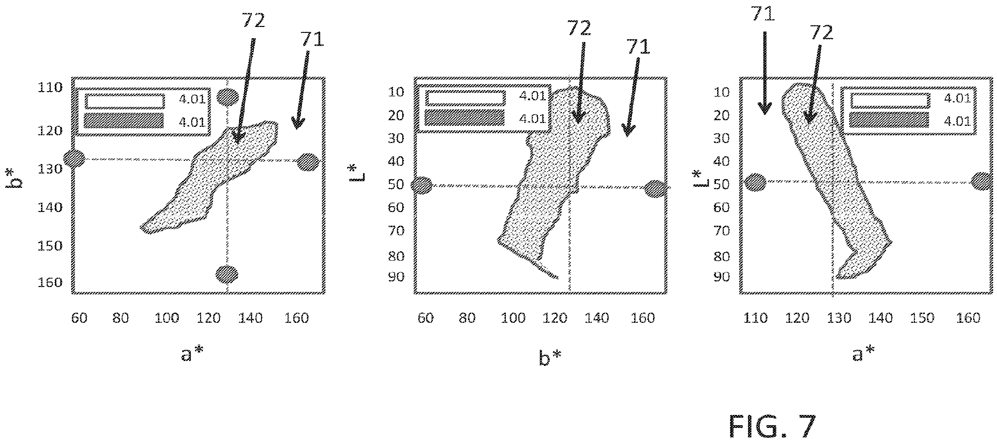

In another embodiment, the colorcloud can include the frequency (i.e. number of times) each color was present in the one or more frames of a video. An example is shown in FIG. 7, where the brighter a pixel is, the higher the frequency of the color represented by that pixel, and vice versa. The outer colorcloud 71 (i.e. full colorcloud) captures every color that was present in the one or more frames, while the inner colorcloud 72 (i.e. optimized colorcloud) captures the colors that were present at a higher frequency. The threshold to determine whether a color is present as a higher frequency can be adjusted depending on the application. In one instance, only the inner colorcloud 72 is used, and the low frequency (i.e. low-information) colors are removed as noise.

In another embodiment, the colorcloud can be used to identify characteristics of hair, such as gray hair coverage, shine, radiance, evenness, glow, etc. For example, color and frequency information from a colorcloud can be used to filter "low-information" colors and enhance the detection of colors to extract the amount of gray hair someone has. As another example, the shine level of hair can be calculated by looking at the average, variance, and spatially-connected clusters of L* value in the hair's colorcloud; high variability suggests a wide range of L* values from dark to bright, and spatially-connected, high L* values suggest a band of shine, both information, when combined, relate to the human perception of shine.

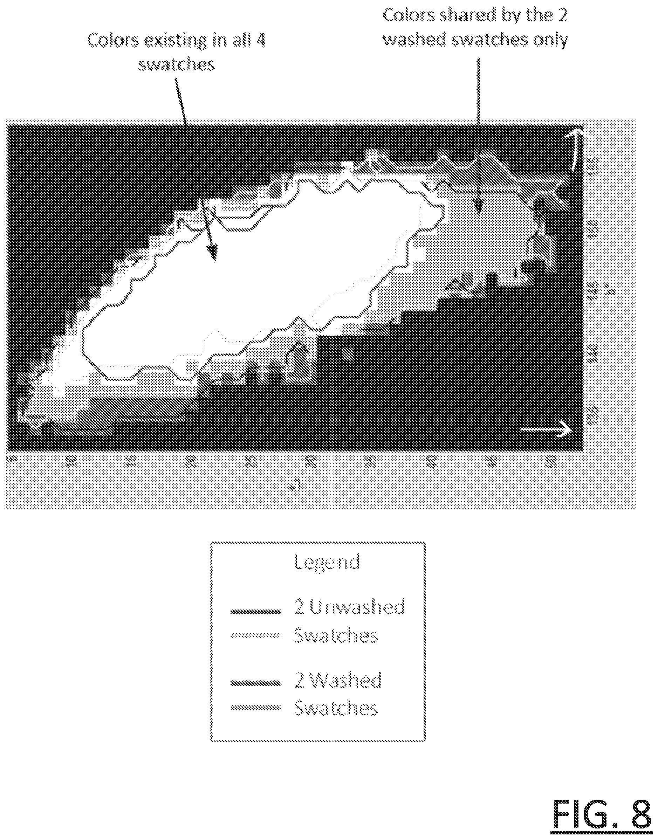

The colorcloud can be compared to other colorclouds to identify similarities and differences. This can enable color change detection and color matching. An example of comparing to other colorclouds is shown in FIG. 8. Colorclouds are produced for two unwashed swatches and those same two swatches after they have been washed. The portions of the colorclouds that overlap indicate similarity in color (i.e. colors that exist in both swatches) and the portions that don't overlap indicate differences in color (i.e. color that are not shared between swatches). This technique quantifies the overlapping and non-overlapping of groups of colors groups in colorspace (e.g. number of, group similarity, average color of group).

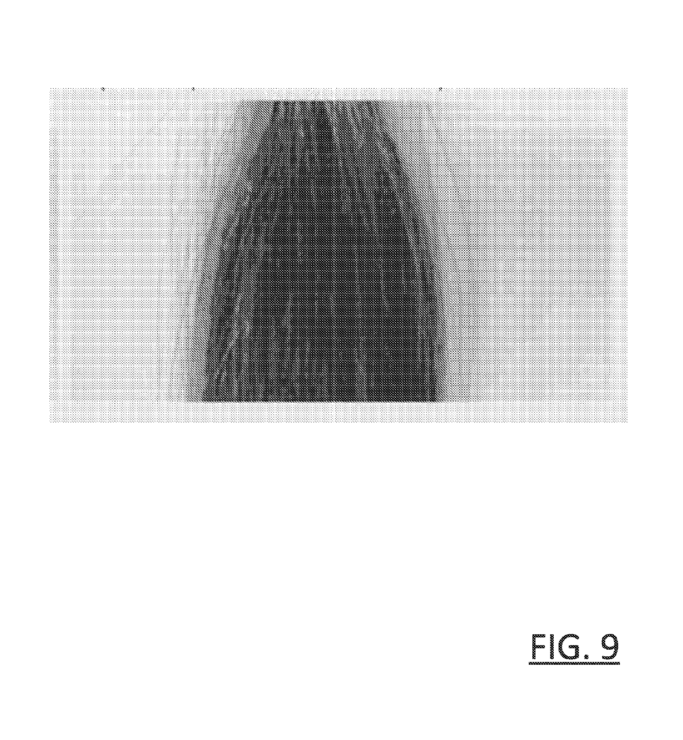

Furthermore, similarities and differences between hair color can be visualized back onto the video. An example is shown in FIG. 9, where colorclouds were made for a swatch before and after washing. The darker areas on the hair indicate shared colors, while the lighter areas indicate unique colors. The similarities and differences between these colorclouds can be identified and visualized directly on the swatch. In other words, the user can replay one of the videos used for capturing the hair, and the similarities/differences can be shown directly on the hair of the video. This is done by simply matching the color of a video-pixel to the color contained in either of the two different colorclouds or the overlap of the two different colotclouds, For example, the color of a video-pixel that matches any of the colors within the colorcloud-overlap or colorcloud-intersection would be colored a dark color in the visualization video.

In another embodiment, an atlas of hair swatches can have a directory of colorclouds created for each hair swatch. Any subsequent captures of hair can then have a colorcloud produced and compared to the swatches in the atlas to determine the closest match (i.e. most similar in color). For good differentiation, swatches should be more similar to themselves than to other swatches.

The techniques mentioned herein can capture a large range of reflection (e.g. from hair swatches and hair head) to measure precisely and robustly heterogenous materials, like color, and measure precisely and robustly hair color change. Applications of these techniques can include measuring color change more precisely and reproducibly than state-of-the-art instrumentations (e.g. spectrophotometers), measure color of human hair (like a hair colorist would do), measure gray coverage (e.g. measure the amount of gray in someone's roots to indicate how much hair color product to use), measure health of hair (e.g. based on shine level, where too low a shine can indicate dullness and suggest damaged hair), dynamic visualizations of hair before and after coloring and/or washing, etc. The techniques mentioned herein can also allow at-home consumer color evaluation, at-store display and visualization, and at-home consumer product recommendation. For example, a consumer can download an app on their phone to capture video and have a colorcloud created. The app could further recommend hair products based on certain characteristics of hair (e.g. can recommend a specific hair color product based on the user's hair color, gray level, and a survey performed on the app). Further, the cradle can have the capability to be portable (e.g. foldable cardboard cradle, 3D printed cradle, etc.).

**Claims**

1. A method of creating a colorcloud for a material, comprising:

   obtaining a video of the material, wherein the video comprises a plurality of frames and the material is hair;
   creating, based on a group of frames of the plurality of frames, a colorcloud for the material, wherein the colorcloud contains every color present in the group of frames and
   identifying characteristics of the hair using the colorcloud.

2. The method of claim 1, wherein the colorcloud contains a frequency of the every color present in the one or more of the plurality of frames.

3. The method of claim 1, further comprising:

   comparing a first colorcloud to a second colorcloud; and
   visualizing, from the comparing, similarities and differences between the first colorcloud and the second colorcloud.

4. The method of claim 1, further comprising;
   displaying the colorcloud in a color space.

5. The method of claim 1, wherein the characteristics of the hair comprise identifying a shine level.

6. A system for creating a colorcloud for a material, comprising:
   processing circuitry configured to,

   obtain a video of the material, wherein the video comprises a plurality of frames and the material is hair;
   create, based on a group of frames of the plurality of frames, a colorcloud for the material, wherein the colorcloud contains every color present in the group of frames; and
   identify characteristics of the hair using the colorcloud.

7. The system of claim 6, wherein the colorcloud contains the frequency of the every color present in the one or more of the plurality of frames.

8. The system of claim 6, wherein the processing circuitry is further configured to compare a first colorcloud to a second colorcloud; and visualize, from the comparing, similarities and differences between the first colorcloud and the second colorcloud.

9. The system of claim 6, wherein the processing circuitry is further configured to display the colorcloud in a color space.

10. The system of claim 6, wherein the characteristics of the hair comprise identifying a shine level.

**Patentansprüche**

1. Verfahren zum Erzeugen einer Farbwolke für ein Material, umfassend:

   Erhalten eines Videos des Materials, wobei das Video eine Vielzahl von Bildern umfasst und das Material Haar ist;
   Erzeugen, basierend auf einer Gruppe von Bildern der Vielzahl von Bildern, einer Farbwolke für das Material, wobei die Farbwolke jede in der Gruppe von Bildern vorhandene Farbe enthält; und
   Identifizieren von Eigenschaften des Haares anhand der Farbwolke.

2. Verfahren nach Anspruch 1, wobei die Farbwolke eine Häufigkeit jeder Farbe enthält, die in einem oder mehreren der Vielzahl von Bildern vorhanden ist.

3. Verfahren nach Anspruch 1, ferner umfassend:

   Vergleichen einer ersten Farbwolke mit einer zweiten Farbwolke; und

Visualisieren, anhand des Vergleichs, von Ähnlichkeiten und Unterschieden zwischen der ersten Farbwolke und der zweiten Farbwolke.

**4.** Verfahren nach Anspruch 1, ferner umfassend:
Anzeigen der Farbwolke in einem Farbraum.

**5.** Verfahren nach Anspruch 1, wobei die Eigenschaften des Haares das Identifizieren eines Glanzgrades umfassen.

**6.** System zum Erzeugen einer Farbwolke für ein Material, umfassend:

eine Verarbeitungsschaltungsanordnung, die ausgelegt ist zum
Erhalten eines Videos des Materials, wobei das Video eine Vielzahl von Bildern umfasst und das Material Haar ist;
Erzeugen, basierend auf einer Gruppe von Bildern der Vielzahl von Bildern, einer Farbwolke für das Material, wobei die Farbwolke jede in der Gruppe von Bildern vorhandene Farbe enthält; und
Identifizieren von Eigenschaften des Haares anhand der Farbwolke.

**7.** System nach Anspruch 6, wobei die Farbwolke die Häufigkeit jeder Farbe enthält, die in einem oder mehreren der Vielzahl von Bildern vorhanden ist.

**8.** System nach Anspruch 6, wobei die Verarbeitungsschaltung ferner ausgelegt ist zum Vergleichen einer ersten Farbwolke mit einer zweiten Farbwolke; und Visualisieren, anhand des Vergleichs, von Ähnlichkeiten und Unterschieden zwischen der ersten Farbwolke und der zweiten Farbwolke.

**9.** System nach Anspruch 6, wobei die Verarbeitungsschaltung ferner ausgelegt ist zum Anzeigen der Farbwolke in einem Farbraum.

**10.** System nach Anspruch 6, wobei die Eigenschaften des Haares das Identifizieren eines Glanzgrades umfassen.


**Revendications**

**1.** Procédé de création d'un nuage de couleurs pour un matériau, comprenant :

l'obtention d'une vidéo du matériau, dans lequel la vidéo comprend une pluralité de vues et le matériau est composé de cheveux ;
la création, sur la base d'un groupe de vues de la pluralité de vues, d'un nuage de couleurs pour le matériau, dans lequel le nuage de couleurs contient chaque couleur présente dans le groupe de vues ; et
l'identification de caractéristiques des cheveux en utilisant le nuage de couleurs.

**2.** Procédé de la revendication 1, dans lequel le nuage de couleurs contient une fréquence de chaque couleur présente dans l'une ou les plusieurs de la pluralité de vues.

**3.** Procédé de la revendication 1, comprenant en outre :

la comparaison d'un premier nuage de couleurs à un second nuage de couleurs ; et
la visualisation, à partir de la comparaison, de similarités et de différences entre le premier nuage de couleurs et le second nuage de couleurs.

**4.** Procédé de la revendication 1, comprenant en outre : l'affichage du nuage de couleurs dans un espace de couleur.

**5.** Procédé de la revendication 1, dans lequel les caractéristiques des cheveux comprennent l'identification d'un niveau de brillance.

**6.** Système pour créer un nuage de couleurs pour un matériau, comprenant :

une circuiterie de traitement configurée pour
obtenir une vidéo du matériau, dans lequel la vidéo comprend une pluralité de vues et le matériau est composé de cheveux ;

créer, sur la base d'un groupe de vues de la pluralité de vues, un nuage de couleurs pour le matériau, dans lequel le nuage de couleurs contient chaque couleur présente dans le groupe de vues ; et
identifier des caractéristiques des cheveux en utilisant le nuage de couleurs.

7. Système de la revendication 6, dans lequel le nuage de couleurs contient la fréquence de chaque couleur présente dans l'une ou les plusieurs de la pluralité de vues.

8. Système de la revendication 6, dans lequel la circuiterie de traitement est en outre configurée pour comparer un premier nuage de couleurs à un second nuage de couleurs ; et visualiser, à partir de la comparaison, des similarités et des différences entre le premier nuage de couleurs et le second nuage de couleurs.

9. Système de la revendication 6, dans lequel la circuiterie de traitement est en outre configurée pour afficher le nuage de couleurs dans un espace de couleurs.

10. Système de la revendication 6, dans lequel les caractéristiques des cheveux comprennent l'identification d'un niveau de brillance.

**FIG. 1**

Video of a material is obtained using a cradle.
S202

A colorcloud is created using one or more frames
from the video.
S204

The colorcloud is compared to other colorclouds.
S206

FIG. 2

<u>FIG. 3</u>

408

407

403

408

401

402

405

404

406

FIG. 4

FIG. 5A

51b

52b

FIG. 5B

FIG. 6

FIG. 7

Colors existing in all 4 swatches

Colors shared by the 2 washed swatches only

Legend

2 Unwashed Swatches

2 Washed Swatches

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10716820
- FR 2101816
- US 9984307 B2